# EUROPÄISCHE PATENTSCHRIFT

(11) **EP 2 649 253 B1**
(45) Veröffentlichungstag und Bekanntmachung des Hinweises auf die Patenterteilung: **18.01.2017**
(21) Anmeldenummer: 11819086.7
(22) Anmeldetag: 07.12.2011
(51) Int. Cl.: B32B 3/12, E04F 15/20, E04B 1/84, E04B 1/90, E04B 1/74, E04C 2/34

(54) **FLÄCHIGES AUSBAUELEMENT**
SHEET-LIKE FINISHING ELEMENT
ÉLÉMENT DE FINITION PLAT

(30) Priorität: 08.12.2010 DE 202010016366 U
(43) Veröffentlichungstag der Anmeldung: 16.10.2013
(73) Patentinhaber: Wolf Bavaria GmbH, 91560 Heilsbronn (DE)
(72) Erfinder: WOLF, Richard, 91580 Petersaurach (DE); WOLF, Michael, 91580 Petersaurach (DE)
(74) Vertreter: Hannke, Christian
(86) Internationale Anmeldenummer: PCT/EP2011/006141
(87) Internationale Veröffentlichungsnummer: WO 2012/076164

(56) Entgegenhaltungen:
- WO-A1-2011/072867
- DE-A1- 2 423 013
- DE-A1- 19 709 620
- DE-A1- 19 809 849
- DE-A1- 19 812 747
- DE-U1-202009 004 235

## Beschreibung

Die Erfindung betrifft ein Ausbauelement nachstehend beschriebener Art.

Es ist bekannt, etwa bei der Altbausanierung unebene Böden oder schadhafte Wände mit Pressspanplatten zu bestücken, um ebenen Untergrund für weitere Ausstattung wie Auflegen eines Teppichbodens oder Anbringen einer Tapete zu erzielen. Kritisch kann allerdings die Körperschallübertragung solchen Untergrundes sein.

Die Druckschrift WO 2011/072867 A1 beschreibt ein Flächenbauelement mit zwischen parallelen Deckschichten angeordneten Welllagen und Kanälen. Diese sind entweder stehend oder liegend angeordnet und bevorzugt mit Granulat befüllt. Allerdings besteht hier noch kein optimaler Feuchteschutz des Flächenbauelements.

Die Druckschrift DE 24 23 013 A1 offenbart ein Schallisolationselement, das für den Innenbereich eingesetzt wird. Auch aus der DE 197 09 620 A1 und der DE 198 09 849 A1 sind schalldämmende Flächenbauelemente bekannt.

Die Druckschrift DE 20 2009 004235 U1 zeigt eine Leichtbauplatte, die aus Decklagen und einer Kernlage aus Füllstoff besteht, aber nicht für den Einsatz als Schalldämpfungselement vorgesehen ist.

Das Konstruktionselement gemäß der Druckschrift DE 198 12 747 A1 stellt ein Plattenelement dar, bei dem zum Zwecke der Materialverstärkung des Stützkerns die Segmente verkleinert werden, indem ein hohlraumbildendes Skelett angeordnet ist.

Vorliegender Erfindung liegt deshalb die technische Problemstellung zugrunde, ein jedenfalls schalldämmendes plattenförmiges, stabiles und belastbares Ausbauelement anzugeben, das auch wärmedämmende Eigenschaften aufweist und eine feuchtigkeitsfeste Option eröffnet sowie flammhemmend ausgelegt sein kann.

Diese Aufgabe ist gemäß den Merkmalen des Hauptanspruches gelöst, die Unteransprüche betreffen zweckmäßige Abwandlungen und Weiterbildungen. Danach ist das flächige Ausbauelement erfindungsgemäß nicht als massiv verdichtete Platte ausgelegt, sondern in seiner Grundausführung als flacher Hohlkörper mit wellen- oder wabenförmiger Innenraum-Stützstruktur zwischen einer unteren und einer oberen, im Verhältnis zur Gesamtstärke des Ausbauelementes jeweils dünnen, Decklage; und mit einer Füllung aus Granulat, insbesondere in Form von gebranntem und gereinigtem Quarzsand, im kanaldurchzogenen Innenraum zwischen den beiderseitigen Decklagen.

Die Aufgabe der Erfindung wird also gelöst von einem flächigen Ausbauelement mit im Querschnitt abgerundet oder kantig wellige, mit Granulat befüllte Kanäle begrenzenden Stützstrukturen in seinem Innenraum zwischen oberen und unteren Decklagen beziehungsweise Trennlagen, wobei die Stützstrukturen mit den Deck- und gegebenenfalls Trennlagen nassfest verklebt sind, und wobei die Deck- und Trennlagen und/ oder die Stützstrukturen des Ausbauelementes mit langfaseriger amorpher Natur- oder Kunstmineralwolle hoch gefülltes, zähes Zellstoffpolymer mit natürlichem (Gelatine- oder Stärke-) Klebstoff oder wässrigen Silicatlösungen oder Kunstharz als Bindemittel aufweisen, wobei wenigstens eine der Deck- oder Trennlagen mit einer feuchteresistenten, aber dampfdurchlässigen Schutzschicht ausgestattet ist.

Luftgefüllte Hohlräume zwischen dem Granulat der Kanalfüllung verleihen dem erfindungsgemäßen Ausbauelement wärmedämmende Eigenschaften; vor allem aber hat die relativ hohe Masse der Füllung schallschluckende, also schalldämmende Eigenschaften, wodurch sie sowohl einer Körperschallleitung längs den anliegenden Decklagen wie auch einer Durchgangsschallübertragung sehr effektiv entgegen wirkt.

Eine einlagige oder eine beiderseits von Trennlagen mehrlagige, jedenfalls zueinander parallele und so Kanäle begrenzende Wellstruktur weist gegenüber ebenfalls erfindungsgemäßen, einander kreuzenden welligen Stützstrukturen den fertigungstechnischen Vorteil auf, den gesamten Innenraum zwischen den beiden äußeren Decklagen ohne Umrüsterfordernisse in einem Arbeitsgang an den an einer Plattenseite offenen Kanalquerschnitten mit Granulat füllen zu können; während die gegenüberliegenden Kanalöffnungen etwa durch Aufstellen auf einen Untersatz vorübergehend verschlossen, vorzugsweise aber bereits durch Verkleben mit Kantband versiegelt sind. Auch die einfüllseitigen Stirnöffnungen werden abschließend durch Aufkleben von Kantband versiegelt.

Erfindungsgemäß wird für die Stützstrukturen und / oder für die Deck- und Trennlagen unmittelbar ein feuchteresistentes Material eingesetzt. Dieses besteht erfindungsgemäß aus gefülltem, nämlich mit möglichst langfaseriger amorpher Natur- oder Kunstmineralwolle vergleichsweise hoch gefülltem, zähem Zellstoffpolymer, mit natürlichem (Gelatine- oder insbesondere Stärke-)Klebstoff oder wässrigen Silicatlösungen oder aber auch Kunstharz als Bindemittel. Somit erweist sich das Ausbauelement als wasserabweisend und feuerfest, dabei selbst an den Kanten praktisch nicht entflammbar.

Für vertikalen Einsatz eines Ausbauelementes etwa als Wandverkleidung, bei dem die Stützstrukturen längs der Scheitellinien ihrer Amplituden an die Deck- beziehungsweise Trennlagen angeschlossen sind, sind die granulatgefüllten Kanäle der Wellstrukturen bevorzugt horizontal auszurichten. Dann kann bei örtlicher Beschädigung einer Decklage, etwa infolge Einschlagens eines Nagels, nicht ein darüber gelegener Kanalabschnitt auslaufen.

Eine derartige Einschränkung erübrigt sich, wenn, unter wesentlicher Erhöhung der mechanischen Belastbarkeit solcher gegebenenfalls feuer- und wasserresistenter Ausbauelemente, die zueinander gekreuzt oder parallel verlaufenden Well-Lagen der Stützstrukturen nicht parallel zu den Deck- und Trennlagen orientiert sind, sondern quer dazu. Bei wabenförmiger, zu den Decklagen sich öffnender Stützstruktur sind nicht mehr die Amplituden-Scheitelverläufe der Stützstrukturen mit den benachbarten Lagen verklebt oder sonst wie stoffschlüssig verbunden, sondern deren Kanäle von den Deck- und Trennlagen verschlossen. Die kanalförmigen Hohlräume im Innenraum des Ausbauelementes verlaufen nun also nicht mehr parallel, sondern orthogonal zu den Deck- und Trennlagen. Die kurzen, nun einander gegenseitig über ihre Mantellinien abstützenden Stützstrukturen sind extrem knickfest, und das bleiben sie auch im Brandfall, da sie wie erwähnt aus Mineral- oder Zellulosefasern erstellt sind. Diese vorteilhaften mechanischen Eigenschaften lassen sich noch steigern, wenn statt der zwischen den Deck- und Trennlagen hochkant stehenden dreieck- oder sinusähnlichen Stützstrukturen eine Säulen-Struktur aus stehenden Hohlkörpern gewählt wird, vorzugsweise in dichtestmöglicher Kreis-Parkettpackung, nämlich als stehende, im Querschnitt drei- oder sechseckige Wabenstrukturen.

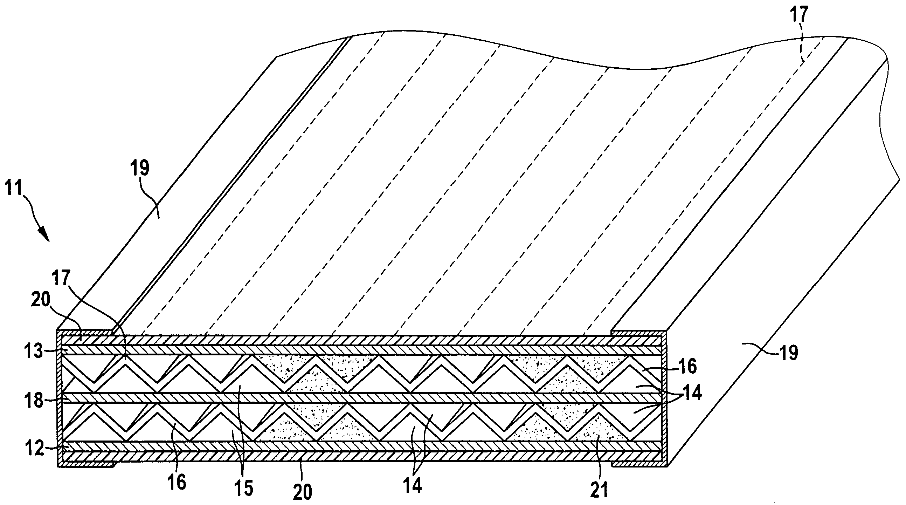

Eine Prinzipskizze für ein Ausführungsbeispiel des erfindungsgemäßen Ausbauelementes in seiner Grundausstattung und deren nachfolgende Beschreibung dienen der beispielhaften Veranschaulichung der erfindungsgemäßen Lösung. Die einzige Figur der Zeichnung zeigt ein solches Ausbauelement, etwas überhöht skizziert, in schräger Ansicht gegen eine noch nicht versiegelte Stirnseite.

Das skizzierte, brettförmig flache Ausbauelement 11 weist zwischen einer unteren Decklage 12 und einer oberen Decklage 13 einen von zueinander parallelen Kanälen 14 durchzogenen Innenraum 15 auf. Bei vertikalem Einbau des Ausbauelementes 11 verlaufen die Kanäle 14 horizontal. Sie sind gegeneinander durch längsverlaufende wellige Stützstrukturen 16 begrenzt, die mit ihren Scheitellinien 17 jedenfalls gegen die Innenflächen der Decklagen 12 beziehungsweise 13 anliegen.

Vorliegend handelt es sich um zweilagige Stützstrukturen 16, nämlich beiderseits einer zu den Decklagen 12, 13 parallel sich erstreckenden Trennlage 18. Skizziert ist das Beispiel zweier im Querschnitt etwa dreieckförmig verlaufender Stützstrukturen 16; gleichermaßen können diese Stützstrukturen 16 im Querschnitt aber auch etwa sinusähnlich verlaufen oder hohlquaderförmig mäandrierende Querschnitte aufweisen.

Die Deck- und Trennlagen 12, 13, 18 sowie deren Stützstrukturen 16 bestehen aus leichten dünnen Materialien wie insbesondere Zellstoff. Die Scheitellinien 17 der Stützstrukturen 16 sind mit den anliegenden Deck-und gegebenenfalls Trennlagen 12, 23, 18 form- oder, vorzugsweise, materialschlüssig verbunden, insbesondere feuchtigkeitsresistent verklebt.

Das anwendungsfertige Ausbauelement 11 ist ringsum hermetisch mit nassfestem Kantband 19 (über die Kanten gezogene Klebebänder) verklebt, erfindungsgemäß unter Auflage nassfester Schutzschichten 20 auf wenigstens eine der Außenflächen der beiden Decklagen 12, 13. Die nassfesten Materialien können Lacke oder dergleichen feuchtigkeitsundurchlässige Schutzschichten sein; vorzugsweise handelt es sich aber um wenigstens einseitig aufgebrachte oder um eingelegte Kunststofffolien. Die sind im Interesse eines guten Raumklimas bevorzugt wasserundurchlässig aber diffusionsoffen, etwa gefertigt aus Polytetrafluorethylen. Im Prinzip reicht es, die Trennlage 18 mit einer dünnen gereckten ePTFE-Membran zu bestücken, um das Ausbauelement 11 insgesamt feuchtigkeitsundurchlässig aber dampfdurchlässig auszurüsten.

Eine, hier die sichtseitige, Querschnitts-Stirnfläche bleibt zunächst noch frei, um für das Befüllen der Kanäle 14 mit Granulat 21 zugänglich zu sein und dann abschließend ebenfalls hermetisch dicht verklebt zu werden.

Ein plattenförmig-flächiges Ausbauelement 11 zum Belegen von Böden und Wänden etwa im Zuge einer Altbausanierung erhält also erfindungsgemäß wärmedämmende sowie schallschluckende Eigenschaften, wenn sein Innenraum 15 zwischen äußeren Decklagen 12, 13 und gegebenenfalls Trennlagen 18 von kanalbildenden, etwa abgerundet oder kantig wellenförmigen Stützstrukturen 16 durchzogen ist, wobei die dadurch voneinander abgegrenzten, zueinander parallel verlaufenden Kanäle 14 mit grobkörnigem Granulat 21 vergleichsweise hoher Dichte gefüllt sind. Die Stützstrukturen 16 sind erfindungsgemäß mit den Deck- 12, 13 und gegebenenfalls Trennlagen 18 nassfest verklebt und insbesondere längs Scheitellinien 17 nassfest mit den Lagen 12, 13 und gegebenenfalls 18 verbunden, der Innenraum 15 zwischen ihnen ist durch umlaufende Kantbänder 19, erfindungsgemäß unter Einfassen auch von flüssigkeitsdichten, feuchteresistenten aber dampfdurchlässigen Schutzschichten 20 auf wenigstens einer der Lagen 12, 13 oder gegebenenfalls 18 nassfest versiegelt. Bei vertikaler Montage dieses Ausbauelementes 11 verlaufen die granulatgefüllten Kanäle 14 horizontal.

### Bezugszeichenliste

- 11: Ausbauelement
- 12: untere Decklage (von 11)
- 13: obere Decklage (von 11)
- 14: Kanäle (in 15 längs 17)
- 15: Innenraum (zwischen 12 und 13)
- 16: Stützstrukturen (in 15)
- 17: Scheitellinien (von 16, 14)
- 18: Trennlage (in 15; zwischen 12-13 beziehungsweise 16-16)
- 19: Kantband (um 11 herum)
- 20: Schutzschichten (auf 12, 13 und/ oder 18)
- 21: Granulat (in 14)

## Patentansprüche

1. Flächiges Ausbauelement (11) mit im Querschnitt abgerundet oder kantig wellige, mit Granulat (21) befüllte Kanäle (14) begrenzenden Stützstrukturen (16) in seinem Innenraum (15) zwischen oberen und unteren Decklagen (12, 13) beziehungsweise Trennlagen (18), wobei die Stützstrukturen (16) mit den Deck- und gegebenenfalls Trennlagen (12, 13; 18) nassfest verklebt sind, und wobei die Deck- und Trennlagen (12, 13; 18) und/ oder die Stützstrukturen (16) des Ausbauelementes (11) mit langfaseriger amorpher Natur- oder Kunstmineralwolle hoch gefülltes, zähes Zellstoffpolymer mit natürlichem (Gelatine- oder Stärke-) Klebstoff oder wässrigen Silicatlösungen oder Kunstharz als Bindemittel aufweisen,
**dadurch gekennzeichnet, dass**
wenigstens eine der Deck- oder Trennlagen (12, 13; 18) mit einer feuchteresistenten, aber dampfdurchlässigen Schutzschicht (20) ausgestattet ist.

2. Ausbauelement nach dem vorangehenden Anspruch, **dadurch gekennzeichnet, dass** die Stützstrukturen (16) einen im Querschnitt hohlquaderförmig mäandrierenden oder dreieck- bis sinusähnlichen Verlauf zeigen.

3. Ausbauelement nach einem der vorangehenden Ansprüche, **dadurch gekennzeichnet, dass** sich orthogonal zu den Deck- und Trennlagen (12, 13; 18) erstreckende Kanäle (14) der Stützstrukturen (16) von den Lagen (12, 13; 18) verschlossen sind.

4. Ausbauelement nach einem der vorangehenden Ansprüche, **dadurch gekennzeichnet, dass** sein Innenraum (15) als Stützstrukturen (16) stehende Hohlkörper aufweist, vorzugsweise stehende, im Querschnitt drei- oder sechseckige Wabenstrukturen.

5. Ausbauelement nach einem der vorangehenden Ansprüche, **dadurch gekennzeichnet, dass** es rundum mittels Kantbändern (19) nassfest versiegelt ist.

6. Ausbauelement nach einem der vorangehenden Ansprüche, **dadurch gekennzeichnet, dass** die Deck- und gegebenenfalls Trennlagen (12, 13; 18) sowie die Stützstrukturen (16) aus Zellstoff bestehen.

7. Ausbauelement nach einem der vorangehenden Ansprüche, **dadurch gekennzeichnet, dass** das Granulat (21) in den Kanälen (14) gebrannter Quarzsand ist.

## Claims

1. Sheet-like finishing element (11) comprising, in its interior (15) between upper and lower cover layers (12, 13) or separating layers (18), supporting structures (16), which define channels (14) filled with granular material (21), which undulate in cross-section in a curved or angular manner, wherein the supporting structures (16) are wet-strength bonded to the cover and optionally separating layers (12, 13; 18), and wherein the cover layers (12, 13) and separating layers (18) and/ or the supporting structures (16) of the finishing element (11) have tough pulp polymer highly filled with long-fibred, amorphous natural or artificial mineral wool and comprising natural (gelatine or starch) adhesive or aqueous silica solutions or synthetic resin as a binding agent, **characterised in that**
at least one of the cover or separating layers (12, 13; 18) is fitted with a moisture-resistant, yet vapour-permeable protective layer (20).

2. Finishing element according to the preceding claim, **characterised in that**, in cross-section, the supporting structures (16) have an extension which either meanders in the shape of a hollow cuboid or is triangular or sinusoidal.

3. Finishing element according to any one of the preceding claims, **characterised in that** channels (14) of the supporting structures (16), which extend orthogonally to the cover-and separating layers (12, 13; 18), are closed by the layers (12, 13; 18).

4. Finishing element according to any one of the preceding claims, **characterised in that** its interior (15) has upright hollow members as supporting structures (16), preferably upright honeycomb structures of either triangular or hexagonal cross-section.

5. Finishing element according to any one of the preceding claims, **characterised in that** the finishing element (11) is fully wet-strength sealed by means of edging strips (19).

6. Finishing element according to any one of the preceding claims, **characterised in that** the cover and optionally separating layers (12, 13; 18) and the supporting structures (16) consist of pulp.

7. Finishing element according to any one of the preceding claims, **characterised in that** the granular material (21) in the channels (14) is burned silica sand.

## Revendications

1. Elément de finition (11) plat, avec des structures d'appui (16) délimitant des conduits (14) ondulés à section transversale arrondie ou anguleuse remplis de granulat (21) dans son espace intérieur (15) entre des couches de couverture (12, 13) supérieures et inférieures ou respectivement couches de séparation (18), les structures d'appui (16) étant collées de façon résistante à l'humidité avec les couches de couverture et éventuellement avec les couches de séparation (12, 13; 18), et les couches de couverture et de séparation (12, 13 ; 18) et/ou les structures d'appui (16) de l'élément de finition (11) présentant un polymère cellulosique résistant, hautement rempli de laine minérale naturelle ou synthétique amorphe à fibres longues avec de la colle naturelle (à la gélatine ou à l'amidon) ou des solutions aqueuses de silicate ou de la résine synthétique en tant que liant,
**caractérisé en ce que**
au moins une des couches de couverture ou de séparation (12, 13 ; 18) est équipée avec une couche de protection (20) résistant à l'humidité mais perméable à la vapeur.

2. Elément de finition selon la revendication précédente, **caractérisé en ce que** les structures d'appui (16) montrent un tracé étant, à section transversale, sinueux en forme de parallélépipède creux ou de type triangulaire à sinusoïdal.

3. Elément de finition selon l'une des revendications précédentes, **caractérisé en ce que** des conduits (14) des structures d'appui (16) s'étendant à angle droit par rapport aux couches de couverture et de séparation (12, 13 ; 18) sont fermés par les couches (12, 13 ; 18).

4. Elément de finition selon l'une des revendications précédentes, **caractérisé en ce que** son espace intérieur (15) présente des corps creux verticaux en tant que structures d'appui (16), de préférence des structures en nid d'abeilles debout à section transversale triangulaire ou hexagonale.

5. Elément de finition selon l'une des revendications précédentes, **caractérisé en ce qu'**il est scellé de façon résistante à l'humidité tout autour au moyen de bandes de chant (19).

6. Elément de finition selon l'une des revendications précédentes, **caractérisé en ce que** les couches de couverture et éventuellement de séparation (12, 13 ; 18) ainsi que les structures d'appui (16) sont composées de cellulose.

7. Elément de finition selon l'une des revendications précédentes, **caractérisé en ce que** le granulat (21) dans les conduits (14) est du sable de quartz cuit.
